# EUROPÄISCHE PATENTSCHRIFT

(11) **EP 3 275 533 B1**
(45) Veröffentlichungstag und Bekanntmachung des Hinweises auf die Patenterteilung: **02.09.2020**
(21) Anmeldenummer: 17181369.4
(22) Anmeldetag: 14.07.2017
(51) Int. Cl.: B01F 7/00, B01F 15/00, B01F 15/06, B29B 7/40

(54) **VORRICHTUNG ZUM MISCHEN VON FLIESSFÄHIGEN MEDIEN**
DEVICE FOR MIXING FREE-FLOWING MEDIA
DISPOSITIF DE MÉLANGE DE MILIEUX POUVANT S'ÉCOULER

(30) Priorität: 30.07.2016 DE 102016009313
(43) Veröffentlichungstag der Anmeldung: 31.01.2018
(73) Patentinhaber: Oerlikon Textile GmbH & Co. KG, 42897 Remscheid (DE)
(72) Erfinder: Witzler, Dietrich, 41569 Rommerskirchen (DE); Jungbluth, Heike, 41569 Rommerskirchen (DE)
(74) Vertreter: Keenway Patentanwälte Neumann Heine Taruttis

(56) Entgegenhaltungen:
- WO-A1-2012/084546
- DE-B- 1 300 426
- US-A- 3 395 805
- US-A- 3 658 266
- US-A- 4 872 761
- US-A1- 2005 259 510
- US-E- R E29 053
- DICKMEISS F: "HIGH-EFFICIENCY DYNAMIC CAVITY MIXERS FOR POLYMER PROCESSING", CHEMICAL FIBERS INTERNATIONAL,, Bd. 57, Nr. 1/02, 1. März 2007 (2007-03-01), Seiten 45-48, XP001541083, ISSN: 0340-3343

## Beschreibung

Die Erfindung betrifft eine Vorrichtung zum Mischen von fließfähigen Medien gemäß dem Oberbegriff des Anspruchs 1.

Eine gattungsgemäße Vorrichtung zum Mischen von fließfähigen Medien ist aus der WO 2012/084546 A1 bekannt.

Die bekannte Vorrichtung zum Mischen von fließfähigen Medien wird in der Polymerverarbeitung eingesetzt, um eine Polymerschmelze mit einem Additiv zu vermengen. So ist es beispielsweise üblich, zum Einfärben einer Polymerschmelze ein flüssiges Farbmittel mit der Polymerschmelze zu vermengen. Für die Gleichmäßigkeit der Einfärbung sind dabei intensive Durchmischungsvorgänge erforderlich. Hierzu weist die bekannte Mischvorrichtung innerhalb einer Mischkammer ein Nutensystem auf, das durch Umfangsnuten an der Oberfläche der Mischwelle und durch Mischnuten an der Innenwand des Gehäuses gebildet ist. Die Umfangsnuten und die Mischnuten sind in einer regelmäßigen Anordnung im wesentlichen achsparallel mit begrenzter Längenausdehnung ausgebildet. Sie sind relativ zueinander so angeordnet, dass - in Achsrichtung gesehen - die Umfangsnuten der Mischwelle die Endbereiche jeweils zweier hintereinander angeordneter Mischnuten im Gehäuse teilweise axial derart überdecken, dass das die Mischkammer durchwandernde Medium in ständigem Wechsel von den Umfangsnuten zu den Mischnuten übergeben wird. Dabei führt die gegeneinander gerichtete Relativbewegung der Mischwelle und des Gehäuses in Umfangsrichtung dazu, dass sich die Zusammensetzung der Füllungen der einzelnen Nuten in Folge ihrer jeweils teilweisen Übergabe an und Übernahme von zwei oder mehr Nuten der anderen Oberfläche in ihrer Zusammensetzung ständig verfeinert. Daher zeichnet sich die bekannte Mischvorrichtung durch hervorragende Mischergebnisse aus.

Bei der bekannten Mischvorrichtung ist die Mischwelle aus einem Mischabschnitt und einem Lagerabschnitt gebildet, wobei der Lagerabschnitt mit einem auskragenden Ende mit einem Antrieb koppelbar ist und durch zwei Lagerstellen drehbar gelagert. Der Mischabschnitt ragt freikragend in die Mischkammer, so dass die bekannte Mischvorrichtung ausschließlich in einer vertikalen Einbausituation genutzt wird.

Es ist somit Aufgabe der Erfindung, die gattungsgemäße Vorrichtung zum Mischen von fließfähigen Medien der gattungsgemäßen Art derart weiterzubilden, dass ein beliebiger Einbau möglich wird.

Ein weiteres Ziel der Erfindung liegt darin, die Lagerung der gattungsgemäßen Mischvorrichtung insbesondere eine Axiallagerung derart zu verbessern, dass selbst beim Anfahren eine ausreichende Schmierung der Axiallagerung gewährleistet ist.

Ein weiteres Ziel der Erfindung besteht darin, die Austauschbarkeit von einem Wälzlager an der bekannten Vorrichtung zu verbessern.

Diese Aufgabe wird erfindungsgemäß dadurch gelöst, dass die Mischwelle am inneren freien Ende des Mischabschnittes einen Wellenabsatz mit einem zylindrischen Endabschnitt aufweist, der innerhalb einer Gleitbohrung des Gehäuses gleitgelagert ist.

Vorteilhafte Weiterbildungen der Erfindung sind durch die Merkmale und Merkmalskombinationen der jeweiligen Unteransprüche definiert.

Die Erfindung zeichnet sich dadurch aus, dass die Mischwelle in dem Gehäuse in jeder beliebigen Einbaulage sicher geführt ist. Die Längenausdehnung des Mischabschnittes der Mischwelle kann entsprechend den gewünschten Mischaufgaben beliebig gewählt werden, ohne dass ein erhöhter Verschleiß in den Lagerstellen des Lagerabschnittes auftritt. Alle auftretenden Kräfte, die an der Mischwelle wirken, lassen sich somit sicher aufnehmen.

Um bei einem Anfahren der Mischwelle eine ausreichende Schmierung der Gleitlagerung am Endabschnitt der Mischwelle zu erhalten, ist die Weiterbildung der Erfindung bevorzugt ausgeführt, bei welchem an dem Gehäuse zumindest ein mit einer Einlassöffnung verbundener Einlasskanal in die Gleitbohrung mündet und bei welchem der Endabschnitt der Mischwelle hohlzylindrisch ausgebildet ist und im Übergangsbereich zum Mischabschnitt mehrere Querbohrungen aufweist, die in die Mischkammer münden. Das durch die Einlassöffnung zugeführte Medium umspült somit direkt den Endabschnitt der Mischwelle und gewährleistet eine Schmierung der Gleitlagerung. Zusätzlich wird eine gleichmäßige Befüllung der Mischkammer innerhalb des Gehäuses erreicht. So kann durch die Anzahl und Verteilung der Querbohrungen in dem Endabschnitt eine über den gesamten Umfang der Mischwelle verteilte Befüllung der Mischkammer erfolgen.

Ein zusätzlicher Vormischeffekt lässt sich noch dadurch erzielen, indem eine Haupteinlassöffnung im Wesentlichen koaxial zur Gleitbohrung an einer äußeren Stirnseite des Gehäuses und eine Nebeneinlassöffnung am Umfang des Gehäuses angeordnet sind. So treffen die beiden Medien unmittelbar vor der Befüllung der Mischkammer bereits zusammen.

Um den Durchsatz der Medien und das Mischergebnis aufeinander abzustimmen, ist bevorzugt der Endabschnitt der Mischwelle mit einem Außendurchmesser ausgeführt, der kleiner ist als der Außendurchmesser des Mischabschnittes der Mischwelle.

Da die Aufnahme von Axialkräften bevorzugt über Wälzlager erfolgt, ist die Weiterbildung der Erfindung besonders vorteilhaft, bei welcher das Gehäuse durch ein Mischgehäuse und ein lösbar mit dem Mischgehäuse verbundenes Lagergehäuses gebildet ist, wobei der Lagerabschnitt durch eine der Lagerstellen im Mischgehäuse und eine andere der Lagerstellen im Lagergehäuses gelagert ist. So besteht die Möglichkeit, die Lagerstelle im Lagergehäuse durch ein Axialwälzlager zu bilden. Einerseits lässt sich dadurch eine Schmiermittelversorgung des Axiallagers unabhängig von dem Mischerbetrieb realisieren. Des Weiteren ist bei einem vorzeitigen Lagerschaden ein Auswechseln des Axialwälzlagers unproblematisch, da das Mischgehäuse nicht demontiert werden muss.

Die Lagerstelle im Mischgehäuse ist bevorzugt durch ein radiales Gleitlager gebildet, wobei eine Gleitbohrung des Gleitlagers in einer Grundplatte des Mischgehäuses ausgebildet ist.

Bei der Durchmischung von Polymerschmelzen ist es üblich, dass das Mischgehäuse beheizt wird. Um die Erwärmung des Axialwälzlagers zu begrenzen, ist des Weiteren vorgesehen, dass das Axialwälzlager und das Gleitlager einen Abstand zueinander aufweisen, der größer ist als eine halbe Länge des Lagerabschnittes der Mischwelle. Somit ist nur ein unmittelbarer Wärmefluss durch die Mischwelle selbst möglich.

Um den Wärmefluss durch die Mischwelle zu begrenzen ist die Weiterbildung der Erfindung bevorzugt ausgeführt, bei welcher das Lagergehäuse im Bereich zwischen dem Mischgehäuse und dem Axialwälzlager hohlzylindrisch mit mehreren am Umfang verteilt angeordneten Mantelöffnungen ausgebildet ist. Somit wird ein Luftaustausch ermöglicht, der die von der Mischwelle abgegebene Wärme aufnimmt.

Die Abgabe der Wärme von der Mischwelle lässt sich noch dadurch verbessern, indem der Lagerabschnitt der Mischwelle innerhalb des Lagergehäuses am Umfang mehrere tellerförmige Kühlringe trägt. Derartige Kühlringe sind bevorzugt aus einem gut wärmeleitenden Material beispielsweis Aluminium ausgeführt, so dass bei Rotation der Mischwelle ein Wärmeaustausch über die Kühlringe möglich wird.

Für den Einbau hat sich die Weiterbildung der Erfindung besonders bewährt, bei welcher eine Auslassöffnung und die Einlassöffnung an der Stirnseite einer Anschlussplatte des Mischgehäuses ausgebildet sind, wobei die Auslassöffnung durch mehrere Auslasskanäle innerhalb des Mischgehäuses mit der Mischkammer verbunden ist. So können sämtliche Anschlüsse unmittelbar an der Anschlussplatte des Mischgehäuses ausgebildet werden. Das Mischgehäuse kann dabei horizontal oder vertikal an einem gegenüberliegenden Anschlussblock gehalten werden.

Aus Fertigungsgründen und zum Aufbau des Nutensystems hat sich die Weiterbildung der Erfindung bewährt, bei welcher das Mischgehäuse zwischen der Grundplatte und der Anschlussplatte mehrere Gehäusemischplatten aufweist, an denen die innenliegenden Mischnuten ausgebildet sind.

Die erfindungsgemäße Vorrichtung zum Mischen von fließfähigen Medien wird nachfolgend anhand eines Ausführungsbeispiels unter Bezug auf die beigefügten Figuren näher erläutert.

Es stellen dar:
- Fig. 1: schematisch eine Ansicht des Ausführungsbeispiels der erfindungsgemäßen Mischvorrichtung
- Fig. 2: schematisch eine Querschnittsansicht des Ausführungsbeispiels aus Fig. 1

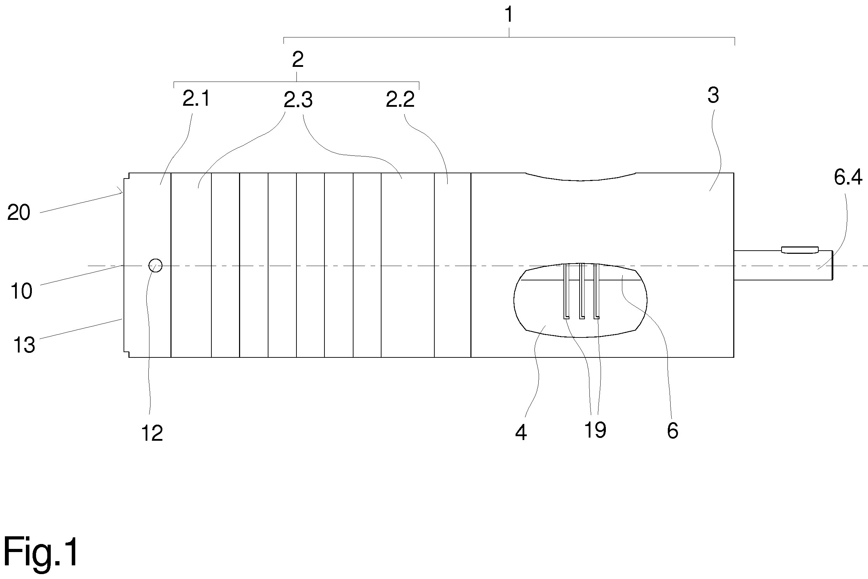

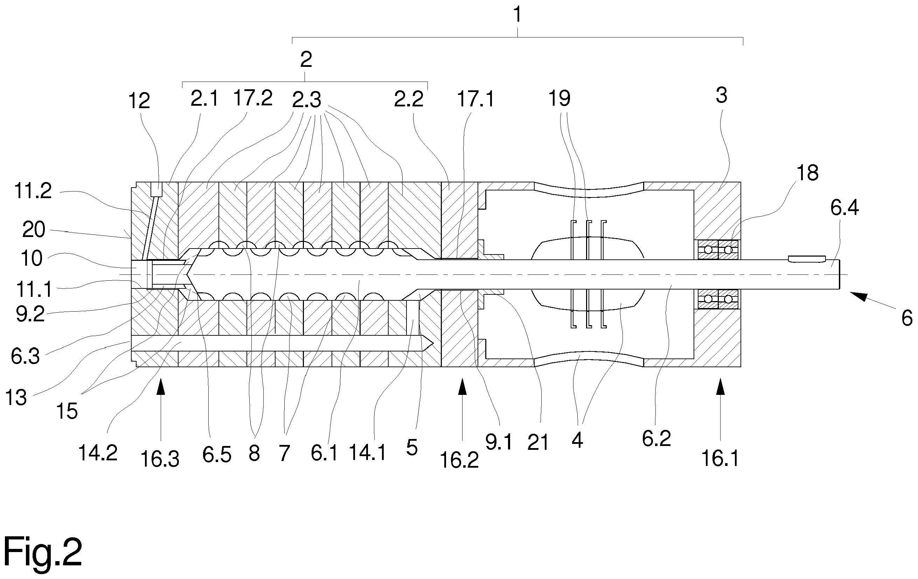

In den Fig. 1 und 2 ist ein Ausführungsbeispiel der erfindungsgemäßen Vorrichtung zum Mischen von fließfähigen Medien in mehreren Darstellungen gezeigt. Die Fig. 1 zeigt eine Seitenansicht und in Fig. 2 ist eine Querschnittsansicht des Ausführungsbeispiels dargestellt.

Wie aus beiden Darstellungen hervorgeht, weist die erfindungsgemäße Vorrichtung ein mehrteiliges Gehäuse 1 auf, das aus einem Mischergehäuse 2 und einem Lagergehäuse 3 gebildet ist. Das Lagergehäuse 3 ist lösbar mit dem Mischergehäuse 2 verbunden. Das Mischergehäuse 2 ist plattenförmig aufgebaut und weist an einer Stirnseite 20 eine Anschlussplatte 2.1 und gegenüberliegend zu dem Lagergehäuse 3 eine Grundplatte 2.2 auf. Zwischen der Anschlussplatte 2.1 und der Grundplatte 2.2 sind mehrere Gehäusemischplatten 2.3 angeordnet. Hierbei werden die Anschlussplatte 2.1, die Gehäuseplatten 2.3 und die Grundplatte 2.2 durch hier nicht näher dargestellte Verbindungsmittel dichtend zusammengehalten.

Das Mischergehäuse 2 und das Lagergehäuse 3 sind in diesem Ausführungsbeispiel zylindrisch ausgebildet und weisen im Innern eine Mischwelle 6 auf, die mit einem Kupplungsende 6.4 aus dem Lagergehäuse 3 hervorragt. Das Kupplungsende 6.4 der Mischwelle ist geeignet, um einen Antrieb zu koppeln.

Aus der Darstellung in Fig. 2 geht der innere Aufbau der erfindungsgemäßen Mischvorrichtung hervor. Die Mischwelle 6 erstreckt sich innerhalb des Gehäuses 1 mit mehreren Abschnitten. Innerhalb einer in dem Mischergehäuse 2 ausgebildeten Mischkammer 5 ist ein Mischabschnitt 6.1 der Mischwelle 6 geführt. Zwischen dem Mischabschnitt 6.1 und dem Kupplungsende 6.4 ist ein Lagerabschnitt 6.2 ausgebildet. Der Lagerabschnitt 6.2 ist im Mischergehäuse 2 und in dem Lagergehäuse 3 durch zwei Lagerstellen 16.1 und 16.2 drehbar gelagert. Die in dem Lagergehäuse 3 ausgebildete Lagerstelle 16.1 weist ein zweireihiges Axialwälzlager 18 auf. Das Axialwälzlager 18 hat eine hier nicht näher dargestellte separate Fett- oder Ölschmierung.

Die in dem Mischergehäuse 2 ausgebildete Lagerstelle 16.2 ist als ein radiales Gleitlager 17.1 ausgeführt. Hierzu ist eine Gleitbohrung 9.1 in der Grundplatte 2.2 vorgesehen, die von dem Lagerabschnitt 6.2 der Mischwelle 6 durchdrungen wird. An der zum Lagergehäuse 3 gewandten Stirnseite der Grundplatte 2.2 schließt sich eine Wellendichtungsbuchse 21 an, die am Umfang des Lagerabschnittes 6.2 der Mischwelle 6 angeordnet ist.

Zwischen dem Gleitlager 17.1 in dem Mischergehäuse 2 und dem Axialwälzlager 18 am freien Ende des Lagergehäuses 3 ist ein Abstand vorgesehen. Der Abstand zwischen den beiden Lagerstellen 16.1 und 16.2 weist eine Größe auf, die vorzugsweise größer als die halbe Länge des Lagerabschnittes 6.2 der Mischwelle 6 ist. Somit lässt sich eine Wärmebrücke zwischen dem Mischergehäuse 2 und dem Axialwälzlager 18 im Lagergehäuse 3 vermeiden. Um die über die Mischwelle 6 durch Wärmeleitung abgegebene Wärmeenergie möglichst nicht in das Axialwälzlager 18 zu führen, sind am Umfang des Lagerabschnittes 6.2 mehrere tellerförmige Kühlringe 19 fest mit der Mischwelle 6 verbunden. Das Lagergehäuse 3 ist hierzu hohlzylindrisch ausgeführt und weist mehrere gleichmäßig am Umfang verteilte Mantelöffnungen 4 auf. Insoweit wird in Betrieb eine Kühlung der Mischwelle 6 im Bereich des Lagerabschnittes 6.2 erreicht.

Der Mischabschnitt 6.1 der Mischwelle 6 ist im Durchmesser der Mischkammer 5 im Mischergehäuse 2 angepasst. Der Mischabschnitt 6.1 der Mischwelle 6 weist am Umfang mehrere Umfangsnuten 7 auf, die mit mehreren in den Gehäusemischplatten 2.3 ausgebildeten Mischnuten 8 zusammenwirken. Die Mischnuten 8 sind hierzu in Teilbereichen am Innendurchmesser der Gehäusemischplatten 2.3 ausgebildet. Die Umfangsnuten 7 am Umfang des Mischabschnittes 6.1 sind demgegenüber an dem gesamten Umfang der Mischwelle 6 verteilt ausgebildet und in radialer Richtung ausgerichtet. Bei dem in Fig. 2 dargestellten Ausführungsbeispiel ist die Mischkammer 5 durch insgesamt acht Gehäusemischplatten 2.3 gebildet. Die Anzahl der Gehäusemischplatten 2.3 sowie die Länge des Mischabschnittes 6.1 der Mischwelle 6 sind hierbei beliebig und hier nur bespielhaft dargestellt. Die an den Enden der Mischkammer 5 angeordneten Gehäusemischplatten 2.3 sind in diesem Ausführungsbeispiel breiter ausgeführt, um jeweils einen Übergang zu einer Querschnittsverengung zu bilden.

Am inneren freien Ende des Mischabschnittes 6.1 weist die Mischwelle 6 einen zylindrischen Endabschnitt 6.3 auf. Der zylindrische Endabschnitt 6.3 ist durch einen Wellenabsatz 6.5 an der Mischwelle 6 gebildet, wobei der Durchmesser des Endabschnittes 6.3 kleiner ist als der Durchmesser des Mischabschnittes 6.1 der Mischwelle 6. Der zylindrische Endabschnitt 6.3 ragt in eine Gleitbohrung 9.2 des Mischergehäuses 2. Die Gleitbohrung 9.2 ist in der Anschlussplatte 2.1 des Mischergehäuses 2 ausgebildet. Der Endabschnitt 6.3 der Mischerwelle 6 ist hohlzylindrisch ausgeführt und erstreckt sich bis zur Mischkammer 5. Im Übergangsbereich zwischen dem Endabschnitt 6.3 und dem Mischabschnitt 6.1 der Mischwelle 6 sind mehrere Querbohrungen 15 vorgesehen, die in die Mischkammer 5 münden. Die Querbohrungen 15 bilden einen Einlass zur Mischkammer 5.

Hierzu ist koaxial zur Gleitbohrung 9.2 an der Stirnseite 20 der Anschlussplatte 2.1 eine Haupteinlassöffnung 10 ausgebildet, die über einen Einlasskanal 11.1 unmittelbar in die Gleitbohrung 9.2 mündet.

Am Umfang der Anschlussplatte 2.1 ist eine Nebeneinlassöffnung 12 vorgesehen, die über einen Einlasskanal 11.2 mit dem Einlasskanal 11.1 verbunden ist.

An dem gegenüberliegenden Ende der Mischkammer 5 ist ein Auslasskanal 14.1 angeordnet, der in einen im Wesentlichen parallel zur Mischkammer 5 verlaufenden zweiten Auslasskanal 14.2 mündet. Der Auslasskanal 14.2 endet an der Stirnseite 20 der Anschlussplatte 2.1 und bildet dort eine Auslassöffnung 13. Somit sind die Haupteinlassöffnung 10 und die Auslassöffnung 13 stirnseitig an der Anschlussplatte 2.1 ausgebildet und können unmittelbar mit einem Anschlussadapter gekoppelt werden.

Bei dem in Fig. 2 dargestellten Ausführungsbeispiel der erfindungsgemäßen Mischvorrichtung wird im Betrieb das Kupplungsende 6.4 der Mischwelle 6 mit einem Antrieb beispielsweise einem Elektromotor gekoppelt, so dass die Mischwelle 6 innerhalb des Gehäuses 1 mit vorbestimmter Drehzahl antreibbar ist. Im Betrieb werden dem Mischer über die Haupteinlassöffnung 10 und der Nebeneinlassöffnung 12 zwei unterschiedliche fließfähige Medien zugeführt, die über die Einlasskanäle 11.1 und 11.2 zur Gleitbohrung 9.2 und somit ins Innere des Endabschnittes 6.3 gelangen. Über die in dem Endabschnitt 6.3 ausgebildeten Querbohrungen 15 werden die beiden Medien gemeinsam in die Mischkammer 5 eingespeist. Eine Vermengung der beiden Medien erfolgt somit bereits in dem Einlasskanal 11.1.

Innerhalb der Mischkammer 5 wird durch Drehung der Mischwelle 6 eine Vermengung der beiden Medien erzeugt. Hierbei wird durch die Umfangsnuten 7 an dem Mischabschnitt 6.1 und den Mischnuten 8 an den Gehäusemischplatten 2.3 eine intensive Umverteilung der äußeren und inneren Schichten erreicht. Am Ende der Mischkammer 5 im Übergangsbereich zwischen dem Mischabschnitt 6.1 und dem Lagerabschnitt 6.2 der Mischwelle 6 wird das Gemisch aus beiden Medien über die Auslasskanäle 14.1 und 14.2 zur Auslassöffnung 13 abgeführt.

Die Mischwelle 6 ist im Betrieb durch insgesamt drei Lagerstellen 16.1, 16.2 und 16.3 drehbar gelagert. Die Lagerstelle 16.3 im Innern des Mischergehäuses 2 ist als Gleitlager 17.2 und die Lagerstelle 16.2 in der der Grundplatte 2.2 des Mischergehäuses 2 ist ebenfalls als ein radial wirkendes Gleitlager 17.1 ausgeführt. Die Schmierung der Gleitlager 17.1 und 17.2 erfolgt dabei durch das Medium selbst. Insbesondere auf der Einlassseite wird das Gleitlager 17.2 durch den unmittelbaren Zustrom der Einlassöffnungen 10 und 12 geschmiert. An dem Gleitlager 16.1 in der Grundplatte 2.2 wird ein Schmierstrom unmittelbar aus der Mischkammer 5 zur Schmierung des Gleitlagers 17.1 genutzt. Die Gleitlager 17.1 und 17.2 sind so ausgelegt, dass sie ausschließlich radial zur Mischerwelle 6 gerichtete Kräfte aufnehmen. Die in axialer Richtung der Mischerwelle 6 gerichteten Kräfte werden durch das Axialwälzlager 18 aufgenommen.

Das Axialwälzlager 18 ist außerhalb des Mischergehäuses 2 in dem Lagergehäuse 3 angeordnet und insoweit unabhängig von dem Mischergehäuse 2 und der Mischwelle 6 auswechselbar.

Die erfindungsgemäße Mischvorrichtung ist für alle fließfähigen Medien geeignet. Insbesondere lassen sich damit jedoch Polymerschmelzen aufbereiten, denen ein Additiv zugeführt wird.

## Patentansprüche

1. Vorrichtung zum Mischen von fließfähigen Medien mit einer antreibbaren Mischwelle (6), die zumindest einen Mischabschnitt (6.1) mit mehreren Umfangsnuten (7) und einen Lagerabschnitt (6.2) mit einem auskragenden Kupplungsende (6.4) aufweist, und mit einem mehrteiligen Gehäuse (1) zur Aufnahme der Mischwelle (6), wobei das Gehäuse (1) im Bereich des Mischabschnitts (6.1) der Mischwelle eine Mischkammer mit mehreren den Umfangsnuten der Mischwelle (6) gegenüberliegenden Mischnuten (8) und im Bereich des Lagerabschnitts (6.2) der Mischwelle (6) mehrere Lagerstellen (16.1, 16.2) aufweist, **dadurch gekennzeichnet, dass** die Mischwelle (6) am inneren freien Ende des Mischabschnitts (6.1) einen Wellenabsatz (6.5) mit einem zylindrischen Endabschnitt (6.3) aufweist, der innerhalb einer Gleitbohrung (9.2) des Gehäuses (1) gleitgelagert ist.

2. Mischvorrichtung nach Anspruch 1, **dadurch gekennzeichnet, dass** an dem Gehäuse (1) zumindest ein mit einer Einlassöffnung (10) verbundener Einlasskanal (11.1) in die Gleitbohrung (9.2) mündet und dass der Endabschnitt (6.3) der Mischwelle (6) hohlzylindrisch ausgebildet ist und im Übergangsbereich zum Mischabschnitt (6.1) mehrere Querbohrungen (15) aufweist, die in die Mischkammer (5) münden.

3. Mischvorrichtung nach Anspruch 2, **dadurch gekennzeichnet, dass** eine Haupteinlassöffnung (10) im Wesentlichen koaxial zur Gleitbohrung (9.2) an einer äußeren Stirnseite (20) des Gehäuses (1) und eine Nebeneinlassöffnung (12) am Umfang des Gehäuses (1) angeordnet sind.

4. Mischvorrichtung nach einem der Ansprüche 1 bis 3, **dadurch gekennzeichnet, dass** der Endabschnitt (6.3) der Mischwelle (6) einen Außendurchmesser aufweist, der kleiner ist als der Außendurchmesser des Mischabschnitts (6.1) der Mischwelle (6).

5. Mischvorrichtung nach einem der Ansprüche 1 bis 4, **dadurch gekennzeichnet, dass** das Gehäuse (1) durch ein Mischgehäuse (2) und ein lösbar mit dem Mischgehäuse (2) verbundenes Lagergehäuse (3) gebildet ist, wobei der Lagerabschnitt (6.2) durch eine der Lagerstellen (16.2) im Mischgehäuse (2) und eine andere der Lagerstellen (16.1) im Lagergehäuse (3) gelagert ist und wobei die Lagerstelle (16.1) im Lagergehäuse (3) durch ein Axialwälzlager (18) gebildet ist.

6. Mischvorrichtung nach Anspruch 5, **dadurch gekennzeichnet, dass** die Lagerstelle (16.2) im Mischgehäuse (2) durch ein radiales Gleitlager (17.1) gebildet ist, wobei eine Gleitbohrung (9.1) des Gleitlagers (17.1) in einer Grundplatte (22) des Mischgehäuses (2) ausgebildet ist.

7. Mischvorrichtung nach Anspruch 5 oder 6, **dadurch gekennzeichnet, dass** das Axialwälzlager (18) und das Gleitlager (17.1) einen Abstand zueinander aufweisen, der größer ist als eine halbe Länge des Lagerabschnitts (6.2) der Mischwelle (6).

8. Mischvorrichtung nach Anspruch 7, **dadurch gekennzeichnet, dass** das Lagergehäuse (3) im Bereich zwischen dem Mischgehäuse (2) und dem Axialwälzlager (18) hohlzylindrisch mit mehreren am Umfang verteil angeordneten Mantelöffnungen (4) ausgebildet ist.

9. Mischvorrichtung nach Anspruch 8, **dadurch gekennzeichnet, dass** der Lagerabschnitt (6.2) der Mischwelle (6) innerhalb des Lagergehäuses (3) am Umfang mehrere tellerförmigen Kühlringe (19) trägt.

10. Mischvorrichtung nach einem der Ansprüche 5 bis 9, **dadurch gekennzeichnet, dass** eine Auslassöffnung (13) und die Einlassöffnung (10) an der Stirnseite (20) einer Anschlussplatte (2.1) des Mischgehäuses (2) ausgebildet sind, wobei die Auslassöffnung (13) durch mehrere Auslasskanäle (14.1, 14.2) innerhalb des Mischgehäuses (2) mit der Mischkammer (5) verbunden ist.

11. Mischvorrichtung nach einem der Ansprüche 5 bis 10, **dadurch gekennzeichnet, dass** das Mischgehäuse (2) zwischen der Grundplatte (2.2) und der Anschlussplatte (2.1) mehrere Gehäusemischplatten (2.3) aufweist, an denen die innenliegenden Mischnuten (8) ausgebildet sind.

## Claims

1. Device for mixing free-flowing media, having a drivable mixing shaft (6) which has at least one mixing portion (6.1) having a plurality of circumferential grooves (7) and a bearing portion (6.2) having a protruding coupling end (6.4), and having a housing (1) in multiple parts for receiving the mixing shaft (6), wherein the housing (1) in the region of the mixing portion (6.1) of the mixing shaft has a mixing chamber having a plurality of mixing grooves (8) which lie opposite the circumferential grooves of the mixing shaft (6), and in the region of the bearing portion (6.2) of the mixing shaft (6) has a plurality of bearing locations (16.1, 16.2),
**characterized in that**
the mixing shaft (6) at the inner free end of the mixing portion (6.1) has a shaft shoulder (6.5) having a cylindrical end portion (6.3) which is mounted so as to slide within a friction bore (9.2) of the housing (1).

2. Mixing device according to Claim 1, **characterized in that** at least one inlet duct (11.1) that is connected to an inlet opening (10) opens into the friction bore (9.2) on the housing (1), and **in that** the end portion (6.3) of the mixing shaft (6) is configured so as to be hollow-cylindrical and in the transition region to the mixing portion (6.1) has a plurality of transverse bores (15) which open into the mixing chamber (5).

3. Mixing device according to Claim 2, **characterized in that** a primary inlet opening (10) is disposed on an outer end side (20) of the housing (1) so as to be substantially coaxial with the friction bore (9.2), and a secondary inlet opening (12) is disposed on the circumference of the housing (1).

4. Mixing device according to one of Claims 1 to 3, **characterized in that** the end portion (6.3) of the mixing shaft (6) has an external diameter which is smaller than the external diameter of the mixing portion (6.1) of the mixing shaft (6).

5. Mixing device according to one of Claims 1 to 4, **characterized in that** the housing (1) is formed by a mixing housing (2) and a bearing housing (3) that is releasably connected to the mixing housing (2), wherein the bearing portion (6.2) is mounted by one of the bearing locations (16.2) in the mixing housing (2) and by one other of the bearing locations (16.1) in the bearing housing (3), and wherein the bearing location (16.1) in the bearing housing (3) is formed by an axial roller bearing (18).

6. Mixing device according to Claim 5, **characterized in that** the bearing location (16.2) in the mixing housing (2) is formed by a radial friction bearing (17.1), wherein a friction bore (9.1) of the friction bearing (17.1) is configured in a base plate (22) of the mixing housing (2).

7. Mixing device according to Claim 5 or 6, **characterized in that** the axial roller bearing (18) and the friction bearing (17.1) have a mutual spacing which is larger than half the length of the bearing portion (6.2) of the mixing shaft (6).

8. Mixing device according to Claim 7, **characterized in that** the bearing housing (3) in the region between the mixing housing (2) and the axial roller bearing (18) is configured so as to be hollow-cylindrical having a plurality of casing openings (4) which are disposed so to be distributed on the circumference.

9. Mixing device according to Claim 8, **characterized in that** the bearing portion (6.2) of the mixing shaft (6) on the circumference within the bearing housing (3) supports a plurality of dish-shaped cooling rings (19).

10. Mixing device according to one of Claims 5 to 9, **characterized in that** an outlet opening (13) and the inlet opening (10) are configured on the end side (20) of a connector plate (2.1) of the mixing housing (2), wherein the outlet opening (13) by way of a plurality of outlet ducts (14.1, 14.2) within the mixing housing (2) is connected to the mixing chamber (5).

11. Mixing device according to one of Claims 5 to 10, **characterized in that** the mixing housing (2) between the base plate (2.2) and the connector plate (2.1) has a plurality of housing mixing plates (2.3) on which the mixing grooves (8) lying on the inside are configured.

## Revendications

1. Dispositif pour mélanger des milieux coulants, comprenant un arbre de mélange (6) pouvant être entraîné, qui présente au moins une portion de mélange (6.1) avec plusieurs rainures périphériques (7) et une portion de palier (6.2) avec une extrémité d'accouplement saillante (6.4), et avec un boîtier (1) en plusieurs parties pour recevoir l'arbre de mélange (6), le boîtier (1) présentant, dans la région de la portion de mélange (6.1) de l'arbre de mélange, une chambre de mélange avec plusieurs rainures de mélange (8) opposées aux rainures périphériques de l'arbre de mélange (6) et, dans la région de la portion de palier (6.2) de l'arbre de mélange (6), plusieurs zones de palier (16.1, 16.2), **caractérisé en ce que** l'arbre de mélange (6) présente, à l'extrémité intérieure libre de la portion de mélange (6.1), un épaulement d'arbre (6.5) avec une portion d'extrémité cylindrique (6.3) qui est supportée de manière glissante à l'intérieur d'un alésage de glissement (9.2) du boîtier (1).

2. Dispositif de mélange selon la revendication 1, **caractérisé en ce qu'**au moins un canal d'entrée (11.1) connecté à une ouverture d'entrée (10) au niveau du boîtier (1) débouche dans l'alésage de glissement (9.2) et **en ce que** la portion d'extrémité (6.3) de l'arbre de mélange (6) est réalisée sous forme cylindrique creuse et présente, dans la région de transition à la portion de mélange (6.1), plusieurs alésages transversaux (15) qui débouchent dans la chambre de mélange (5).

3. Dispositif de mélange selon la revendication 2, **caractérisé en ce qu'**une ouverture d'entrée principale (10) est disposée essentiellement coaxialement à l'alésage de glissement (9.2) au niveau d'un côté frontal extérieur (20) du boîtier (1) et une ouverture d'entrée auxiliaire (12) est disposée au niveau de la périphérie du boîtier (1).

4. Dispositif de mélange selon l'une quelconque des revendications 1 à 3, **caractérisé en ce que** la portion d'extrémité (6.3) de l'arbre de mélange (6) présente un diamètre extérieur qui est inférieur au diamètre extérieur de la portion de mélange (6.1) de l'arbre de mélange (6).

5. Dispositif de mélange selon l'une quelconque des revendications 1 à 4, **caractérisé en ce que** le boîtier (1) est formé par un boîtier de mélange (2) et un logement de palier (3) connecté de manière amovible au boîtier de mélange (2), la portion de palier (6.2) étant supportée par l'une des zones de palier (16.2) dans le boîtier de mélange (2) et une autre des zones de palier (16.1) étant supportée dans le logement de palier (3) et la zone de palier (16.1) dans le logement de palier (3) étant formée par un palier à roulement axial (18).

6. Dispositif de mélange selon la revendication 5, **caractérisé en ce que** la zone de palier (16.2) dans le boîtier de mélange (2) est formée par un palier lisse radial (17.1), un alésage de glissement (9.1) du palier lisse (17.1) étant réalisé dans une plaque de base (22) du boîtier de mélange (2).

7. Dispositif de mélange selon la revendication 5 ou 6, **caractérisé en ce que** le palier à roulement axial (18) et le palier lisse (17.1) présentent un espacement l'un de l'autre qui est supérieur à la moitié de la longueur de la portion de palier (6.2) de l'arbre de mélange (6).

8. Dispositif de mélange selon la revendication 7, **caractérisé en ce que** le logement de palier (3) dans la région entre le boîtier de mélange (2) et le palier à roulement axial (18) est réalisé sous forme cylindrique creuse avec plusieurs ouvertures d'enveloppe (4) réparties sur la périphérie.

9. Dispositif de mélange selon la revendication 8, **caractérisé en ce que** la portion de palier (6.2) de l'arbre de mélange (6) à l'intérieur du logement de palier (3) porte plusieurs bagues de refroidissement en forme de coupelle (19) sur la périphérie.

10. Dispositif de mélange selon l'une quelconque des revendications 5 à 9, **caractérisé en ce que** l'ouverture de sortie (13) et l'ouverture d'entrée (10) sont réalisées au niveau du côté frontal (20) d'une plaque de raccordement (2.1) du boîtier de mélange (2), l'ouverture de sortie (13) étant raccordée à la chambre de mélange (5) par plusieurs canaux de sortie (14.1, 14.2) à l'intérieur du boîtier de mélange (2).

11. Dispositif de mélange selon l'une quelconque des revendications 5 à 10, **caractérisé en ce que** le boîtier de mélange (2) présente, entre la plaque de base (2.2) et la plaque de raccordement (2.1), plusieurs plaques de mélange de boîtier (2.3) au niveau desquelles sont réalisées les rainures de mélange situées à l'intérieur (8).
